# EUROPEAN PATENT APPLICATION

(11) **EP 4 756 264 A1**
(43) Date of publication of application: **10.06.2026**
(21) Application number: 24217086.8
(22) Date of filing: 03.12.2024
(51) Int. Cl.: F16J 15/18, F04B 39/04, F16J 15/24, F16J 15/26, F16J 15/56

(54) **PACKING RING FOR RECIPROCATING COMPRESSOR**

(71) Applicant: Compressor Products International LLC, Stafford, Texas 77477 (US)
(72) Inventor: MAHIEUX, Pascal, 59680 Colleret (FR)
(74) Representative: Murgitroyd & Company

(57) **Abstract**

A packing ring (312) for use with a reciprocating compressor is disclosed. According to one aspect, the disclosure is directed to a packing ring assembly that includes a first ring (316), a second ring (320), and a biasing member (336). The first ring includes a first portion (316a) and a second portion (316b) separated by a first cut (332a) of a plurality of cuts. The first ring has an outer surface, an inner surface, and a first feature. The second ring includes a first segment (320a) and a second segment (320b) separated by a first gap (328a) of a plurality of gaps. The second ring has a first surface and a second surface, and is set on the first feature such that the first surface contacts the inner surface and second surface contacts the first feature. The biasing member is arranged on the outer surface and arranged to apply a compressive force on the first ring.

## Description

### FIELD OF INVENTION

The present invention relates to the field of reciprocating compressors and, in particular, to sealing techniques for preventing gas from bypassing a piston, thereby substantially forcing the gas to undergo compression by the piston.

### BACKGROUND

Reciprocating compressors are positive displacement compressors. A reciprocating compressor generally includes an assembly, *e*.*g*., a piston and crosshead assembly, that transfers energy through a piston rod that is connected to a piston which compresses gas in a cylinder. A piston rod that is part of the piston assembly transmits reciprocating motion from the crankshaft to the piston. The pathway that the piston rod follows within the reciprocating compressor provides a potential leak path for gas into or out of the cylinder. Rod packing is generally used to reduce the amount of leakage along a leak path.

### SUMMARY

Techniques for reducing the amount of gas leakage along a leak path of a reciprocating compressor are disclosed. These techniques may be embodied as one or more methods, one or more apparatuses, *e*.*g*., rings used for piston rod packing, and/or one or more systems, *e*.*g*., reciprocating compressors.

In accordance with at least one embodiment, the disclosure is directed to a packing ring assembly that includes a first ring, a second ring, and a biasing member. The first ring includes a plurality of portions and a plurality of cuts, the plurality of portions including a first portion and a second portion, the first portion and the second portion being separated by a first cut of the plurality of cuts, wherein the first ring has an outer surface, an inner surface, and a first feature. The second ring includes a plurality of segments and a plurality of gaps, the plurality of segments including a first segment and a second segment, the first segment and the second segment being separated by a first gap of the plurality of gaps, the second ring having a first surface and a second surface, wherein the second ring is set on the first feature such that the first surface is in contact with the inner surface and second surface is in contact with the first feature. The biasing member is arranged on the outer surface of the first ring and arranged to apply a compressive force on the first ring.

In accordance with another aspect, a reciprocating compressor includes a piston and a packing ring assembly. The packing ring assembly surrounds a piston rod of the piston which moves within the packing ring assembly. The packing ring assembly includes a first ring, a second ring, and a biasing member. The first ring is in contact with the piston rod, and includes a plurality of portions and a plurality of cuts. The plurality of portions includes a first portion and a second portion that are separated by a first cut of the plurality of cuts. The first ring has an outer surface, an inner surface, and a first feature that is also in contact with the rod, like the first ring. The second ring is in contact with the piston rod, and includes a plurality of segments and a plurality of gaps. The plurality of segments including a first segment and a second segment, the first segment and the second segment being separated by a first gap of the plurality of gaps. The second ring has a first surface and a second surface, wherein the second ring is set on the first feature such that the first surface is in contact with the inner surface and second surface is in contact with the first feature. The biasing member is arranged on the outer surface of the first ring and applies a compressive force on the first ring.

These and other advantages and features will become evident in view of the drawings and detailed description.

### BRIEF DESCRIPTION OF THE DRAWINGS

To complete the description and in order to provide for a better understanding of the present invention, a set of drawings is provided. The drawings form an integral part of the description and illustrate an embodiment of the present invention, which should not be interpreted as restricting the scope of the invention, but just as an example of how the invention can be carried out. The drawings comprise the following figures:
FIG. 1A is a diagrammatic representation of a reciprocating compressor that includes a plurality of packing rings.
FIG. 1B is a diagrammatic representation of a piston rod of a reciprocating compressor that includes a plurality of packing rings.
FIG. 2 is a diagrammatic cross-sectional representation of a portion of a piston rod with a packing ring in accordance with an embodiment.
FIG. 3A is a diagrammatic representation of a packing ring that includes an outer ring with cuts and an inner ring with gaps when the packing ring is in a non-worn state in accordance with an embodiment.
FIG. 3B is a diagrammatic representation of a packing ring that includes an outer ring with cuts and an inner ring with gaps, *e*.*g*., packing ring 312 of FIG. 3A, as shown with a biasing member in accordance with an embodiment.
FIG. 4 is a diagrammatic representation of a packing ring that includes an outer ring with cuts and an inner ring with gaps, *e*.*g*., packing ring 312 of FIG. 3A, when the packing ring is in a worn state in accordance with an embodiment.
FIG. 5A is a diagrammatic representation of a section of a packing ring that includes an inner ring when the inner ring is in a non-worn state in accordance with an embodiment.
FIG. 5B is a diagrammatic representation of a section of a packing ring, *e*.*g*., section 516 of FIG2 5A, when the inner ring is in a worn state in accordance with an embodiment.
FIG. 6 is a diagrammatic perspective representation of a packing ring that includes an outer ring with cuts and an inner ring with gaps in accordance with an embodiment.
FIG. 7 is a diagrammatic exploded representation of a packing ring, *e*.*g*., packing ring 612 of FIG. 6, in accordance with an embodiment.

Like reference numerals have been used to identify like elements throughout this disclosure.

### DETAILED DESCRIPTION

The following description is not to be taken in a limiting sense but is given solely for the purpose of describing the broad principles of the invention. Embodiments of the invention will be described by way of example, with reference to the above-mentioned drawings showing elements and results according to the present invention.

Generally, the present application is drawn to techniques for preventing gas leakage from a piston cylinder of a reciprocating compressor. A packing ring that is a labyrinth seal may prevent such leakage as the piston is driven by a crankshaft. In one embodiment, the packing ring includes an inner ring and an outer ring that are configured to compensate for wear on the inner ring by forcing the inner ring to maintain contact with the piston rod. The outer ring includes cut portions and the inner ring includes segments that are offset from one another such that gaps are provided between the segments. As the inner ring wears, a biasing member forces the cut portions of the outer ring inwards, which, in turn, causes the cut-separated portions to force the inner ring to seal against a piston rod. It should be appreciated that the outer ring also wears at the same time that the inner ring wears. The force applied to the inner ring may cause the segments of the inner ring to move relative to one another to reduce the size of the gap between adjacent segments. Thus, as the inner ring becomes worn, the inner ring may remain sealed against the piston rod when both the outer ring and the inner ring effectively wear. That is, as the inner ring wears, the outer ring may also wear, and may urge the inner ring inwards, reducing the gaps between the inner ring segments to increase seal efficiency.

The technology is described with specific reference to rod packing for reciprocating compressors. It should be appreciated, however, that the technology described herein may be used for other devices where a rod or stem passes out of a pressure vessel such as a liquid compressor, a fluid pump, a valve stem, etc. That is, the use of a packing ring that includes an inner ring with gaps and a cut outer ring is not limited to be used for rod packing in a reciprocating compressor. To be clear, the present application may be implemented in and/or utilized with piston compressors and other compressors of other types.

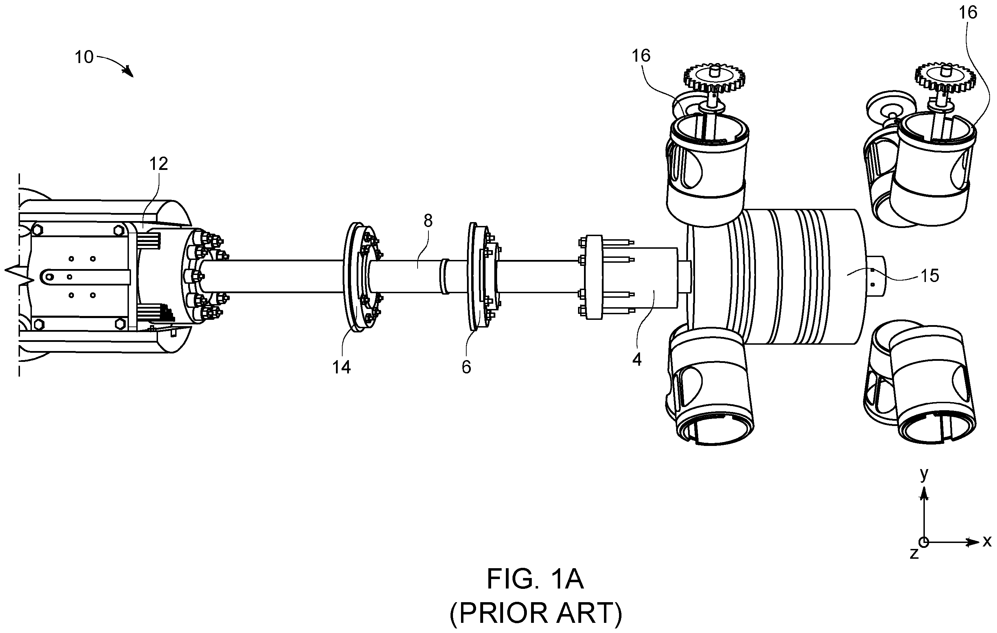

FIG. 1A is a diagrammatic representation of a reciprocating compressor. A reciprocating compressor 10 includes components such as a crosshead 12, a cylinder 15 that contains a piston, a piston rod 8, and one or more valves 16. Piston rod 8 is coupled to piston contained in a cylinder 15 and to crosshead 12. Reciprocating compressor 10 also includes any number or rod packing rings, as for example rod packing ring 4 (reference 4 generally points to a stuffing box that may house packing rings, but is intended to denote packing rings that may be included therein), rod packing ring 6, and rod packing ring 14. Rod packing ring 4, rod packing ring 6 and rod packing ring 14 may be configured to generally reduce gas and oil leakage along piston rod 8.

More specifically, rod packing rings provided at or near the crankcase, like packing rings 6 and 14, may provide seals and/or features that reduce the amount of oil that may be carried throughout a reciprocating compressor 10. Meanwhile, rod packing rings used at or near the piston cylinder 15, like packing ring 4, may provide seals that effectively block gas from flowing out of the piston cylinder 15. For example, packing ring 4 may provide a seal positioned to block gas flow between piston cylinder 15 and a remainder of the reciprocating compressor 10. In one embodiment of the present application, packing ring 4 includes an outer ring that is a tangential joint packing ring and an inner ring that has segments that are spaced apart by radial gaps.

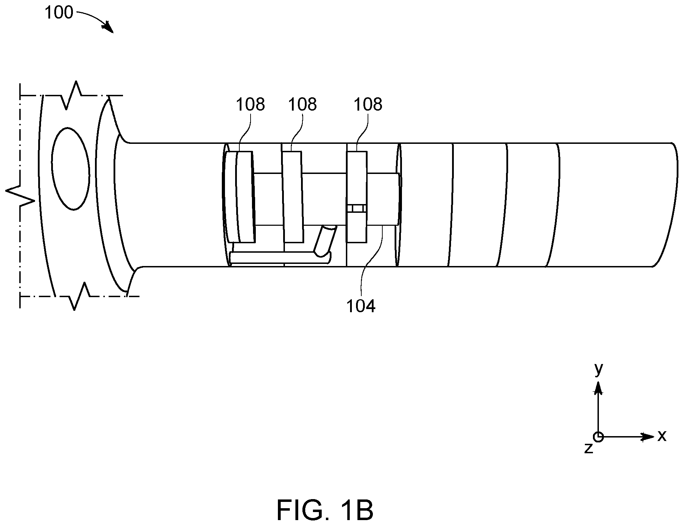

Referring next to FIG. 1B, a compressor packing case of a reciprocating compressor that includes packing rings will be described. A compressor packing case 100 generally includes a piston rod 104 of a piston (not shown) that includes a plurality of packing rings 108. Packing rings 108 may include labyrinth seals. Piston rod 104 is configured to move along an x-axis through packing rings 108.

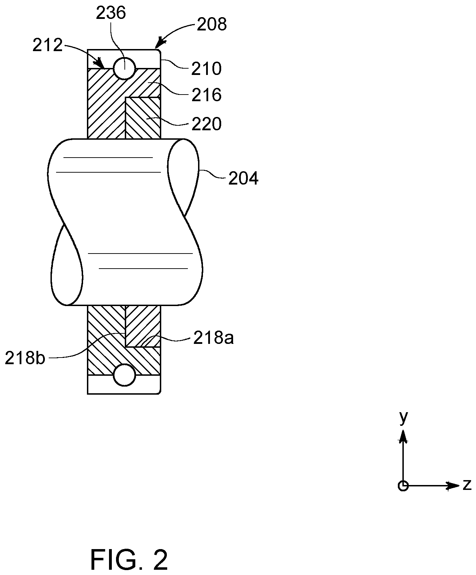

FIG. 2 is a diagrammatic cross-sectional representation of a packing ring and a portion of a piston rod of a reciprocating compressor in accordance with an embodiment. A piston rod 204 of a piston (not shown) is surrounded by a packing ring 208. Packing ring 208 includes an enclosure 210, or a cup, which surrounds or otherwise contains a ring assembly 212. In one embodiment, ring assembly 212 is a seal that includes an outer ring 216 and an inner ring 220. Inner ring 220 is arranged to be seated in outer ring 216, as for example, such that a first surface 218a and a second surface 218b of inner ring 220 are in contact with outer ring 216. A biasing member 236 is arranged to apply an inward or compressive force on outer ring 216 and on inner ring 220.

Outer ring 216 and inner ring 220 may be formed from any suitable material including, but not limited to including, composite polymer-based materials such as polytetrafluroethylene (PTFE) or polyetheretherketone (PEEK). It should be appreciated that outer ring 216 and inner ring 220 may be formed from the same, or different, materials. Further, the materials from which outer ring 216 and inner ring 220 may be formed are not limited to composite polymer-based materials. For example, outer ring 216 and inner ring 220 may be formed from metals.

Outer ring 216 and inner ring 220 may be configured to compensate for wear. As outer ring 216 and inner ring 220 wear or become worn, the wear on outer ring 216 and inner ring 220 may be compensated for in order to substantially maintain the efficiency of the seal formed by inner ring 220 against piston rod 204. When the seal formed by inner ring 220 against piston rod 204 is compromised, gas flow may pass through the seal, and gas may thus exit the piston cylinder. In one embodiment, outer ring 216 includes cuts and inner ring 220 includes gaps which enable packing ring 208 to compensate for wear. In short, the cuts enable the outer ring 216 to exert an inwardly compressive force on the inner ring 220 and the gaps allow the inner ring 220 to shrink an inner diameter of the inner ring 220 in response to the inwardly compressive force. Shrinking the inner diameter keeps the inner ring 220 in close conformity with a piston rod as the radial span/dimension of the inner ring 220 decreases, e.g., due to wear, over time. This maintains the sealing efficiency of the ring assembly 212 over time. It should be appreciated that both inner ring 220 and outer ring 216 seal, with outer ring 216 substantially functioning as a primary seal.

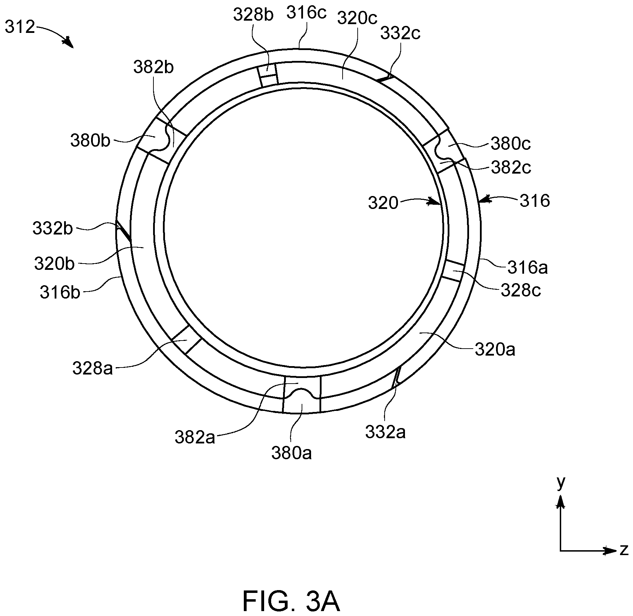

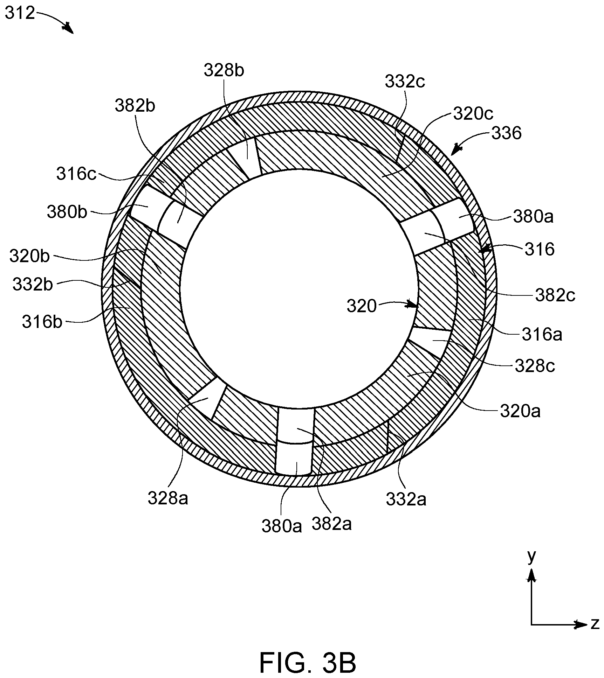

With reference to FIGs. 3A and 3B, a packing ring that includes an outer ring with cuts and an inner ring with gaps is shown when the packing ring is in a non-worn or unworn state in accordance with an embodiment. A packing ring 312, or a seal, includes an outer ring 316 or an outer ring arrangement arranged around an inner ring 320 or an inner ring arrangement. As shown in FIG. 3B, a biasing member 336 or elastic member may be extended around or otherwise arranged around outer ring 316, and configured to apply an inward force, or a compressive force, to outer ring 316. Biasing member 336 may be, but is not limited to being, an o-ring or a spring, *e*.*g*., an annular spring or a garter spring. In one embodiment, biasing member 336 may be positioned in a groove or channel (not shown) on an outer surface of outer ring 316.

Outer ring 316 includes a first portion 316a, a second portion 316b, and a third portion 316c. First portion 316a and second portion 316b are separated by a first cut 332a, second portion 316b and third portion 316c are separated by a second cut 332b, and third portion 316c and first portion 316a are separated by a third cut 332c. It should be appreciated that first cut 332a, second cut 332b, and third cut 332c are through cuts and generally have an approximately zero gap. In one embodiment, the size and shape of first portion 316a, second portion 316b, and third portion 316c is substantially the same, although it should be appreciated that first portion 316a, second portion 316b, and third portion 316c are not limited to having substantially the same size and shape. Additionally or alternatively, other embodiments may utilize a different number of portions or cuts as compared to the example embodiment shown in the Figures.

Inner ring 320 includes a first segment 320a, a second segment 320b, and a third segment 320c. First segment 320a and second segment 320b are positioned adjacent to each other, and are separated by a first gap 328a. Second segment 320b and third segment 320c are separated by a second gap 328b. Third segment 320c and first segment 320a are separated by a third gap 328c. In one embodiment, gaps 328a-c may have gap sizes or widths in the range of between approximately one millimeter (mm) and approximately five mm, although it should be appreciated that the gap sizes may be larger depending upon the radius of a piston rod that inner ring 320 is on contact with. While first segment 320a, second segment 320b, and third segment 320c are shown as having substantially the same size and shape, first segment 320a, second segment 320b, and third segment 320c are not limited to having substantially the same size and shape. First gap 328a, second gap 328b, and third gap 328c are shown as having substantially the same size, although it should be understood the sizes of first gap 328a, second gap 328b, and third gap 328c are not limited to being substantially the same. Additionally or alternatively, other embodiments may utilize a different number of portions or cuts as compared to the example embodiment shown in the Figures.

Biasing member 336 is configured to provide a compressive force to outer ring 316, which then provides a compressive force on inner ring 320. That is, biasing member 336 effectively squeezes outer ring 316. As packing ring 312 and packing ring 316 wear over time, biasing member 336 may cause portions 316a-c to slide with respect to each other. In addition, segments 320a-c may slide with respect to each other such that the size or radial width of gaps 328a-c may be reduced, *e*.*g*., gaps 328a-c may effectively be closed as segments 320a-c slide.

In order to prevent a leak path from being formed within packing ring 312, cuts 332a-c are not radially aligned with gaps 328a-c. That is, cuts 332a-c are formed in outer ring 316 and gaps 328a-c are formed in inner ring 320 such that cuts 332a-c and gaps 329a-c do not overlap radially (*i*.*e*., not aligned at a radial location on a circumference). Instead, an outer surface of inner ring 320 abuts an inner surface of outer ring 316 and this interface between inner ring 320 and outer ring 316 effectively blocks gas flow from exiting the ring assembly 312 radially. As such, the sealing capability provided between inner ring 320 and outer ring 316 provides sufficient sealing capabilities even with the presence of gaps 328a-c.

Still referring to FIGs. 3A and 3B, outer ring 316 includes protrusions 380a-c and inner ring 320 includes receptacles 382b that are arranged to engage protrusions 380a-c. This engagement prevents significant movement of outer ring 316 with respect to inner ring 320, or vice versa, as outer ring 316 and inner ring 320 wear and as biasing member 336 applies an inward force on outer ring 316 and inner ring 320. As shown, protrusion 380a is arranged to engage receptacle 382a to maintain relative positioning of second portion 316b and first segment 320a, protrusion 380b is arranged to engage receptacle 382b to maintain relative positioning of third portion 316c and second segment 320b, and protrusion 380c is arranged to engage receptacle 382c to maintain relative positioning of first portion 316a and third segment 320c. It should be appreciated that although protrusions 380a-c and receptacles 382a-c are described, other types of engagement features or structures may be used to enable outer ring 316 and inner ring 320 to maintain substantially engaged. That is, engagement features which facilitate the ability of portions 316a-c and segments 320a-c, respectively, to maintain relative contact with each other are not limited to being protrusions 380a-c and receptacles 382a-c.

As previously mentioned, an inner ring 320 and an outer ring 316 of a packing ring 312 may begin to wear as a result of constant movement of a piston rod of a piston against the inner ring 320. To substantially prevent the inner ring 320 from losing contact with the piston rod, portions 316a-c of an outer ring 316 may effectively deform to accommodate such wear, and force the inner ring 320 to maintain contact with the piston rod such that a substantially sealed interface between the packing ring 312 and the piston rod is maintained. The ends of portions 316a-c of an outer ring 316 may extend at least partially tangentially to a circumference of the outer ring 316 to enable the portions 316a-c to essentially slide along one another. For example, the inward force imparted by a biasing member 336 urges the portions 316a-c against one another, such as to at least partially overlap with one another, thereby shrinking the circumference of the outer ring 316 and allowing the biasing member 336 to impart an inward force on inner ring 320.

The inward force imparted by biasing member 336 onto the portions 316a-c of the outer ring 316 drive the portions to move along one another to cause the portions 316a-c to move inward, or towards a piston rod of a piston. As the portions 316a-c move further inward, a force, or inner ring 320 supporting force, on the inner ring 320 is maintained that effectively biases or otherwise drives the inner ring 320 against the piston. Thus, the wear of the inner ring 320 may be compensated for as the size of gaps 328a-c between segments 320a-c of the inner ring 320 is reduced. More specifically, as the inner ring 320 wears, the inner surface of inner ring 320 wears away, which decreases the outer diameter of inner ring 320. The gaps 328a-c may be defined, at least in part, by the edges of segments 320a-c adjacent to gaps 328a-c and, at first, the edges may define relatively larger gaps 328a-c. However, as the inner surfaces of segments 320a-c wear away, the edges will move closer together (as a result of the inner diameter increasing and/or the outer diameter decreasing) and the gaps 328a-c will shrink under compression that continues to drive edges of segments 320a-c adjacent to gaps 328a-c inwards and towards each other. In view of this, the portions 316a-c of outer ring 316 maintain a sufficient amount of force around the inner ring 320 to retain the segments 320a-c against each other while also maintaining segments 320a-c against the piston.

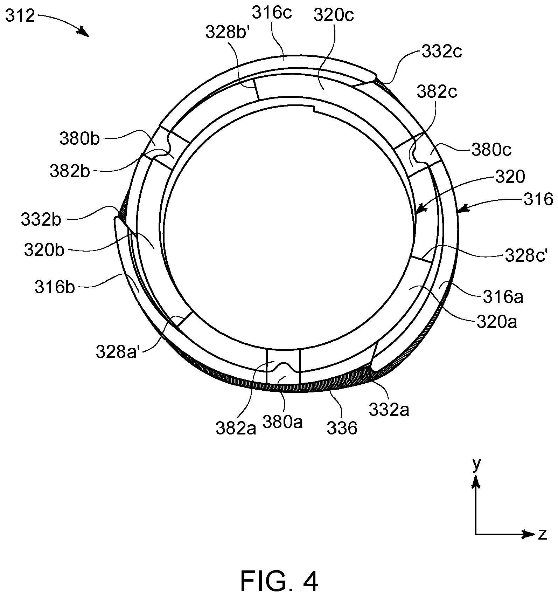

FIG. 4 is a diagrammatic representation of a packing ring 312 when packing ring 312 is in a worn state in accordance with an embodiment. As inner ring 320 becomes worn, inner ring 320 may maintain contact with a piston rod of a piston (not shown) as biasing member 336 applies an inward or compressive force to outer ring 316 and, hence, inner ring 320. As is described above, when inner ring 320 wears and biasing member 336 applies an inward force, segments 320a-c shift. When segments 320a-c shift, gaps 328a-c as shown in FIGs. 3A and 3B close or are otherwise reduced in size as indicated by gaps 328a'-c'. As first gap 328a', second gap 328b', and third gap 328c' close, first portion 316a effectively slides over second portion 316b at cut 332a, second portion 316b effectively slides over third portion 316c at cut 332b, and third portion 316c slides over first portion 316a at cut 332c. That is, adjacent portions 316a-c may overlap each other. It should be appreciated that outer ring 316 may also wear as inner ring 320 wears.

When outer ring 316 further wears, an overlap between adjacent portions 316a-c, *e*.*g*., first portion 316a and second portion 316b, increases, thereby causing outer ring 316 to maintain contact with inner ring 320 to bias inner ring 316 against a piston rod of a piston (not shown). As inner ring 316 further wears, biasing member 336 may further deform outer ring 316 and further increase the overlap between adjacent portions 316a-c to continue to bias inner ring 320 against a piston rod of a piston (not shown). For example, the force imparted by the portions 316a-c may effectively cause segments 320a-c to fully abut one another (*i*.*e*., abut along a radial dimension of segments 320a-c), and substantially remove gaps 328a'-c' between adjacent segments 320a-c. When gaps 328a'-c' are substantially removed, wear compensation is effectively ended.

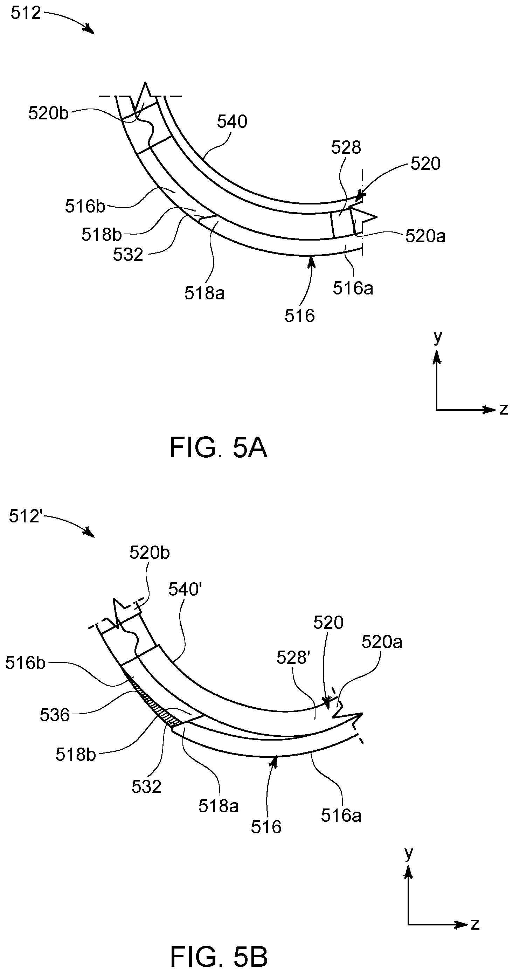

With reference to FIGs. 5A and 5B, the movement of portions of an outer ring as an inner ring wears will be discussed in accordance with an embodiment. FIG. 5A is a diagrammatic representation of a section of a packing ring that includes an inner ring when the inner ring is in a non-worn state in accordance with an embodiment. A section 512 of a packing ring includes an outer ring 516 that includes a first portion 516a and a second portion 516b that are substantially separated by a cut 532. Cut 532 separates a first end 518a of first portion 516a from a second end 518b of second portion 516b.

Section 512 also includes a first segment 520a and a second segment 520b of an inner ring 520 that are separated by a gap 528. An inner surface 540 of inner ring 520 is arranged to be in contact with, or to abut, a piston rod of a piston (not shown), and may wear over time.

As surface 540 wears, gap 528 becomes smaller as first segment 520a and second segment 520b shift, and first end 518a moves relative to end 518b. As shown in FIG. 5B, when surface 540 becomes worn, the size of gap 528' is reduced, and first end 518a moves to slightly overlap second end 518b due to the application of an inward or compressive force by a biasing member 536. Thus, surface 540' maintains contact with a piston rod of a piston (not shown) when surface 540' is worn, as gap 528' effectively closes and first end 518a slides over second end 518b when biasing member 536 applies an inward force on outer ring 516 and inner ring 520. First end 518a may slide over second end 518b such that first end 518a extends at least partially tangentially to a circumference of outer ring 516 to enable first portion 516a and second portion 516b to essentially slide along one another.

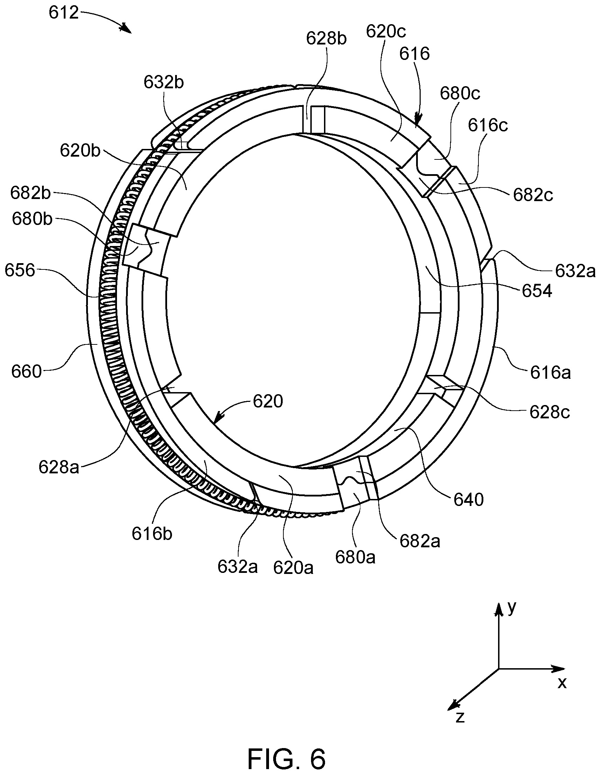

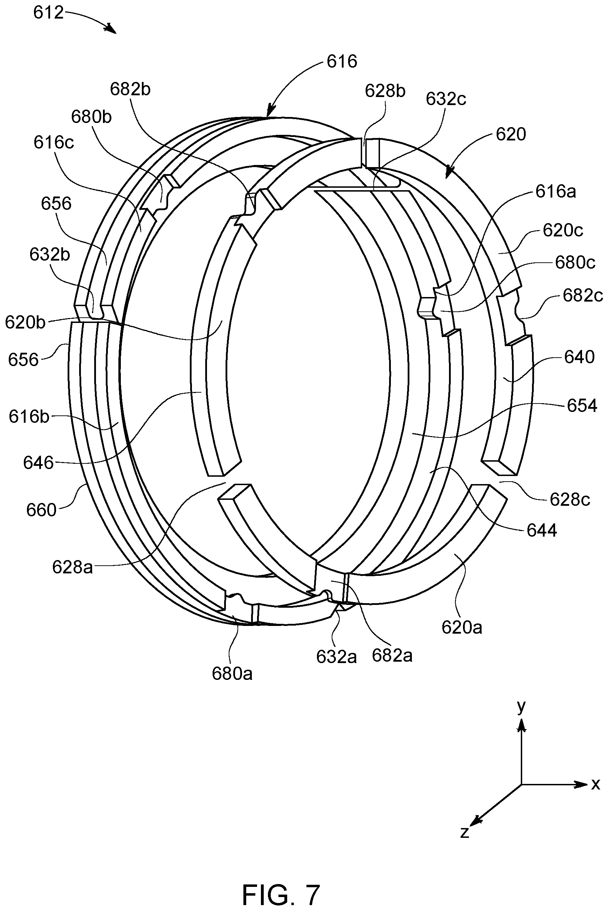

In one embodiment, an outer ring of a packing ring may be configured to enable an inner ring to be set into the outer ring. FIG. 6 is a diagrammatic perspective representation of a packing ring that includes an outer ring with cuts, as well as an inner ring with gaps that is arranged to be set into the outer ring, in accordance with an embodiment. When assembled, a packing ring 612 is formed from an outer ring 616 and an inner ring 620 which, in one embodiment, is set into outer ring 616. As shown in FIG. 7, which is an exploded representation of packing ring 612, inner ring 620 may effectively set into outer ring 616 using a feature 654, as for example a shelf. That is, inner ring 620 may essentially be seated on feature 654, which supports inner ring 620. When inner ring 620 is set into outer ring 616, an outer diameter or circumference of inner ring 620 may be substantially flush with an inner diameter of outer ring 616.

When inner ring 620 is set into outer ring 616 on feature 654, an inner diameter of outer ring 616 with respect to feature 654 is approximately the same as the inner diameter of inner ring 620. An outer diameter 646 or surface of inner ring 620 is arranged to contact an interior contact surface 644 of outer ring 616 when a bottom surface (not shown) of inner ring 620 is in contact with feature 654. In general, when inner ring 620 and outer ring 616 are in an unworn state, a diameter of with interior contact surface 644 may be approximately the same as outer diameter 646. The same may at least sometimes be true when inner ring 620 and outer ring 616 are in a worn state.

Outer ring 616 includes a first portion 616a, a second portion 616b, and a third portion 616c. First portion 616a is separated from second portion 616b by a first cut 632a, second portion 616b is separated from third portion 616c by a second cut 632b, and third portion 616c is separated from first portion 616a by a third cut 632c. A channel 656 or groove is formed around the outer surface 660 or edge of outer ring 616, and is arranged to support a biasing member (not shown). That is, a biasing member such as biasing member 336 of FIG. 3B may be positioned in or otherwise disposed in channel 656 formed on outer surface 660.

Inner ring 620 includes a first segment 620a that is separated from a second segment 620b by a first gap 628a, and a third segment 620c that is separated from second segment 620b by a second gap 628b and separated from first segment 620a by a third gap 628c. In general, an inner diameter of outer ring 616 is approximately equal to an outer diameter of inner ring 620. Inner ring 620 is configured to surround a piston rod of a piston (not shown).

As inner ring 620 wears, first segment 620a, second segment 620b, and third segment 620c may slide on feature 654. When first segment 620a, second segment 620b, and third segment 620c slide, first gap 628a, second gap 628b, and third gap 628c may be reduced in size. That is, gaps 628a-c may effectively close.

A first outer ring engagement feature 680a, which may be a protrusion, of first portion 616a is arranged to engage a first inner ring engagement feature 682a, which may be a receptacle, such that first portion 616a and first segment 620a may maintain contact as inner surface 640 wears. A second outer ring engagement feature 680b is arranged to engage a second inner ring engagement feature 682b to maintain contact between second portion 616b and second segment 620b, and a third outer ring engagement feature 680c is arranged to engage a third inner ring engagement feature 682c to maintain contact between third portion 616c and third segment 620c.

Although only a few embodiments have been described in this disclosure, it should be understood that the disclosure may be embodied in many other specific forms without departing from the spirit or the scope of the present disclosure. By way of example, while an outer ring has been described as include three portions and an inner ring has been described as including three segments separated by three gaps, the number of portions that are part of an outer ring and the number of segments in an inner ring may vary widely. For instance, an outer ring may include more than or fewer than three portions, and an inner ring may include more than or fewer than three segments.

An outer ring has generally been described as having portions separated by cuts, and an inner ring has generally been described as having segments separated by gaps. It should be appreciated that when an overall packing ring is in an unworn state, the cuts and gaps may have any suitable dimensions, *e*.*g*., widths. That is, the spacing, breaks, slits, etc. between adjacent ring portions and/or ring segments may vary depending upon the particular requirements and/or desired performance of a packing ring.

In one embodiment, a biasing force generated by a biasing member on a packing ring may cause adjacent inner corners of segments of the packing ring into contact at gaps of the ring. Such contact may prevent at least some radial leakage with respect to a piston rod.

While this application has described the techniques presented herein in detail and with reference to specific embodiments thereof, it is nevertheless not intended to be limited to the details shown, since it will be apparent that various modifications and structural changes may be made therein without departing from the scope of the inventions and within the scope and range of equivalents of the claims. In addition, various features from one of the embodiments may be incorporated into another of the embodiments. Accordingly, it is appropriate that the appended claims be construed broadly and in a manner consistent with the scope of the disclosure as set forth in the following claims.

Finally, it is intended that the present invention cover the modifications and variations of this invention that come within the scope of the appended claims and their equivalents. For example, it is to be understood that terms such as "left," "right," "top," "bottom," "front," "rear," "side," "height," "length," "width," "upper," "lower," "interior," "exterior," "inner," "outer" and the like as may be used herein, merely describe points of reference and do not limit the present invention to any particular orientation or configuration. Further, the term "exemplary" is used herein to describe an example or illustration. Any embodiment described herein as exemplary is not to be construed as a preferred or advantageous embodiment, but rather as one example or illustration of a possible embodiment of the invention.

Similarly, when used herein, the term "comprises" and its derivations (such as "comprising", etc.) should not be understood in an excluding sense, that is, these terms should not be interpreted as excluding the possibility that what is described and defined may include further elements, steps, etc. Meanwhile, when used herein, the term "approximately" and terms of its family (such as "approximate", etc.) should be understood as indicating values very near to those which accompany the aforementioned term. That is to say, a deviation within reasonable limits from an exact value should be accepted, because a skilled person in the art will understand that such a deviation from the values indicated is inevitable due to measurement inaccuracies, etc. The same applies to the terms "about" and "around" and "substantially". Finally, for the purposes of the present disclosure, the phrase "A and/or B" means (A), (B), or (A and B). For the purposes of the present disclosure, the phrase "A, B, and/or C" means (A), (B), (C), (A and B), (A and C), (B and C), or (A, B and C).

## Claims

1. A packing ring assembly comprising:
a first ring, the first ring including a plurality of portions and a plurality of cuts, the plurality of portions including a first portion and a second portion, the first portion and the second portion being separated by a first cut of the plurality of cuts, wherein the first ring has an outer surface, an inner surface, and a first feature;
a second ring, the second ring including a plurality of segments and a plurality of gaps, the plurality of segments including a first segment and a second segment, the first segment and the second segment being separated by a first gap of the plurality of gaps, the second ring having a first surface and a second surface, wherein the second ring is set on the first feature such that the first surface is in contact with the inner surface and the second surface is in contact with the first feature; and
a biasing member, the biasing member being arranged on the outer surface of the first ring and arranged to apply a compressive force on the first ring.

2. The packing ring assembly of claim 1, wherein a groove is formed on the outer surface of the first ring, and wherein the biasing member is disposed in the groove.

3. The packing ring assembly of claims 1 or 2, wherein the first feature is a shelf, and wherein the first segment and the second segment are arranged to slide on the shelf to reduce a size of the first gap.

4. The packing ring assembly of claim 3, wherein the first segment and the second segment slide on the shelf as at least the second ring wears over time.

5. The packing ring assembly of any of the preceding claims, wherein the first ring includes at least a first engagement feature and the second ring includes at least a second engagement feature, and wherein the first engagement feature is configured to engage the second engagement feature.

6. The packing ring assembly of claim 5, wherein the first engagement feature is included on the first portion and the second engagement feature is included on the first segment, wherein the first engagement feature is configured to engage the second engagement feature to maintain contact between the first portion and the first segment.

7. The packing ring assembly of any of the preceding claims, wherein at least the first cut and at least the first gap are not radially aligned.

8. The packing ring assembly of any of the preceding claims, wherein the biasing member is arranged to apply the compressive force to allow a first end of the first portion to slide over a second end of the second portion.

9. A reciprocating compressor comprising:
a piston, the piston including a piston rod; and
a packing ring assembly, the packing ring assembly being positioned to surround the piston rod, the piston rod being arranged to move within the packing ring assembly, the packing ring assembly comprising:
a first ring in contact with the piston rod, the first ring including a plurality of portions and a plurality of cuts, the plurality of portions including a first portion and a second portion, the first portion and the second portion being separated by a first cut of the plurality of cuts, wherein the first ring has an outer surface, an inner surface, and a first feature;
a second ring, the second ring being in contact with the piston rod, the second ring including a plurality of segments and a plurality of gaps, the plurality of segments including a first segment and a second segment, the first segment and the second segment being separated by a first gap of the plurality of gaps, the second ring having a first surface and a second surface, wherein the second ring is set on the first feature such that the first surface is in contact with the inner surface and the second surface is in contact with the first feature; and
a biasing member, the biasing member being arranged on the outer surface of the first ring and arranged to apply a compressive force on the first ring.

10. The reciprocating compressor of claim 9 wherein a groove is formed on the outer surface of the first ring, and wherein the biasing member is disposed in the groove.

11. The reciprocating compressor of claims 9 or 10 wherein the first feature is a shelf, and wherein the first segment and the second segment are arranged to slide on the shelf to reduce a size of the first gap to maintain contact with the piston rod.

12. The reciprocating compressor of claim 11, wherein the first segment and the second segment slide on the shelf as the second ring wears over time.

13. The reciprocating compressor of any of claims 9-12, wherein the first ring includes at least a first engagement feature and the second ring includes at least a second engagement feature, and wherein the first engagement feature is configured to engage the second engagement feature.

14. The reciprocating compressor of any of claims 9-13, wherein the first cut and the first gap are not radially aligned.

15. The reciprocating compressor of any claims 9-14, wherein the biasing member is an annular spring arranged to apply the compressive force to cause a first end of the first portion to slide over a second end of the second portion.
